# EUROPÄISCHE PATENTANMELDUNG

(11) **EP 0 764 800 A1**
(43) Veröffentlichungstag der Anmeldung: **26.03.1997**
(21) Anmeldenummer: 96890146.2
(22) Anmeldetag: 18.09.1996
(51) Int. Cl.: F16J 3/04

(54) **Elastisches Falten- oder Wellenband**

(30) Priorität: 25.09.1995 AT 1589/95
(71) Anmelder: Semperit Aktiengesellschaft Holding, 1031 Wien (AT)
(72) Erfinder: Buchinger, Hans-Peter, 7202 Sauerbrunn (AT); Deutsch, Heinz, 2603 Felixdorf (AT); Schabauer, Wolfgang, 2630 Ternitz (AT)
(74) Vertreter: Köhler-Pavlik, Johann, Dipl.-Ing.

(57) **Zusammenfassung**

Elastisches Band, insbesondere Faltenband (1), welches zur Ermöglichung einer Relativbewegung in allen drei Achsrichtungen von der Oberfläche abstehende Hohlkörper (8 besitzt, die mit dem Band (1) einstückig ausgebildet sind und nach außen auf der Basis als Hohlkörper (8) offen sind.

## Beschreibung

Die Erfindung betrifft ein elastisches Falten- oder Wellenband nach dem Oberbegriff des Patentanspruches 1.

Mit derartigen Dichtungsbändern sollen zwei relativ zueinander bewegliche Bauteile elastisch verbunden und der Raum zwischen ihnen durch das vorzugsweise umlaufende und beispielsweise endlos miteinander verbundene Band nach außen hin abgedichtet werden.

Zur einseitigen Abdichtung von Fugen werden Profilbänder mit wellen- oder faltenförmig gestaltetem Querschnitt eingesetzt. Durch entsprechende Gestaltung der Größe, Form und Anzahl der Wellen bzw. Falten kann das Profilband in seiner Querrichtung, d.h. quer zu der Längsrichtung der einzelnen Wellen oder Falten zusammengedrückt oder gedehnt werden. Damit sind große Abstandsänderungen dieser Bauteile zueinander in einer Achsrichtung möglich. Eine Schubverformung in Längsrichtung des Profilbandes bzw. deren einzelnen Wellen oder Falten und damit eine Relativverformung in den beiden anderen Achsrichtungen - z.B. bei einer Querverschiebung der Bauteile zueinander - ist auf Grund der Längssteifigkeit der langen Bänder nur mit großem Kraftaufwand und kleinen Verformungen möglich. Deshalb können Bauteilfugen, bei denen auch Verschiebungsbewegungen auftreten mit herkömmlichen Dichtungsbändern nicht abgedichtet werden.

Der Erfindung liegt die Aufgabe zugrunde, ein elastisches Band, vorzugsweise ein Faltenband oder Dichtungsband zu schaffen, das auch bei großen Verschiebungen der zu verbindenden Bauteile zueinander diese Relativbewegungen in allen drei Achsrichtungen ohne Behinderung möglich macht und dabei allenfalls auch die Dichtfunktion immer gewährleistet ist.

Diese Aufgabe wird erfindungsgemäß dadurch gelöst, daß das Band auf Schub verformbare hohle Auskröpfungen aufweist.

Weitere Vorteile ergeben sich durch die Maßnahmen nach den Unteransprüchen.

Weitere Merkmale der Erfindung werden anhand der Zeichnungen näher erläutert, in welchen Ausführungsbeispiele des erfindungsgemäßen elastischen Bandes dargestellt sind. Es zeigen
Fig. 1 ein herkömmliches Dichtungsband, welches zwei Bauteile miteinander verbindet,
Fig. 2 eine Draufsicht eines Teiles des erfindungsgemäßen Bandes (Ansicht II der Fig. 3),
Fig. 3 die Stirnansicht eines erfindungsgemäßen Bandes,
Fig. 3a einen Schnitt nach der Linie III-III der Fig. 3
Fig. 4 das Band nach den Fig. 2 und 3 in schaubildlicher Darstellung,
Fig. 5 das Band nach der Fig. 4 unter Schubbelastung,
Fig. 6a eine zweite Ausführungsform des erfindungsgemäßen Bandes im Normalzustand,
Fig. 6b das Band nach Fig. 6a im zusammengedrückten und in
Fig. 6c in gedehntem Zustand,
Fig. 7a einen Bandabschnitt, der in Y-Richtung verschoben ist,
Fig. 7b das Band nach Fig. 7a, das in Y-Richtung verschoben ist,
Fig. 8a eine weitere Ausführungsform des erfindungsgemäßen Bandes,
Fig. 8b einen Schnitt nach der Linie VIII-VIII der Fig. 8a,
Fig. 9 eine weitere Ausführungsform des erfindungsgemäßen Bandes in der Verwendung als Abdichtung eines Personenüberganges zwischen Eisenbahnwaggons in Stirnansicht,
Fig. 10 einen Ausschnitt des Bandes nach Fig. 9 in größerem Maßstab,
Fig. 11 eine Draufsicht des Bandes in Richtung des Pfeiles I der Fig. 9,
Fig. 12 einen Schnitt nach der Linie XII-XII der Fig. 9 und
Fig. 13 einen Schnitt nach der Linie XIII-XIII der Fig. 9.

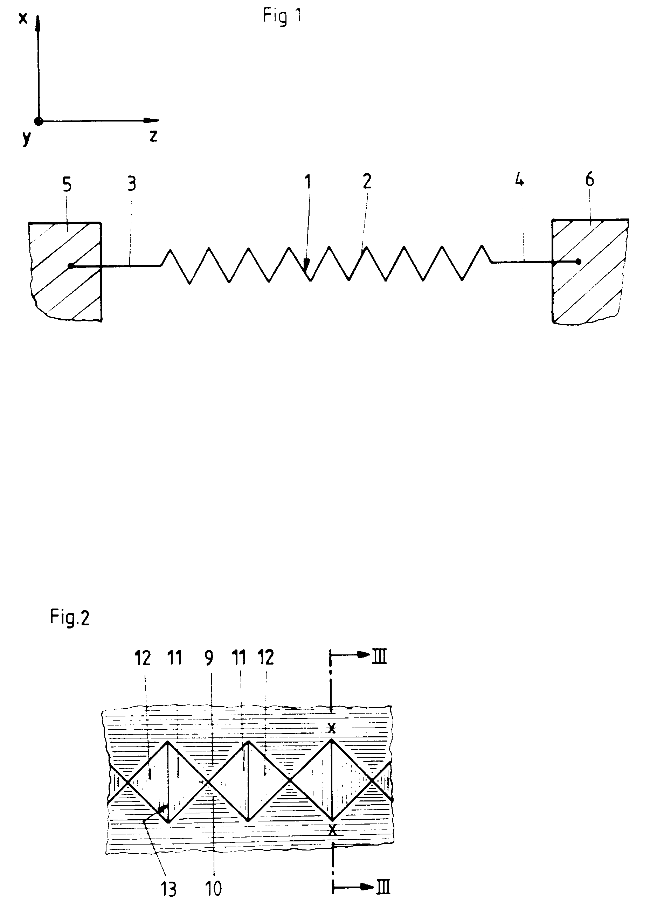

Das in Fig. 1 gezeigte herkömmliche Dichtungsband 1 dient zur Verbindung von Bauteilen 5,6 und besteht aus einem verformbaren, faltenförmigen Mittelteil 2, welcher an beiden Seiten starre Befestigungteile 3, 4 aufweist, die mit den Bauteilen 5,6 form- und kraftschlüssig verbunden sind. Die Befestigungsteile 3,4 können in den Bauteilen 5,6 eingegossen oder mit diesen verschraubt oder genietet sein. Es besteht beispielsweise auch die Möglichkeit, einen Wulst des einen Teiles in eine Nut des anderen Teiles einzuziehen. Diese Dichtungsbänder sind nur so lange funktionsfähig, als sich die Bauteile 5,6 relativ zueinander nur in X-oder Z-Richtung verschieben. Größere Relativbewegungen der Bauteile zueinander in Y-Richtung sind bis auf sehr geringe Verformungen bei großen Kräften aufgrund der Schubfestigkeit des Gesamtsystems nicht möglich.

Um eine leichte Verformbarkeit des Bandes 1 und damit große Schubverformungen in Y-Richtung des Bandes 1 zu ermöglichen, muß die Schubfestigkeit welche bei einem Faltenband durch die in Längsrichtung verlaufenden Falten bedingt ist, wesentlich verringert werden.

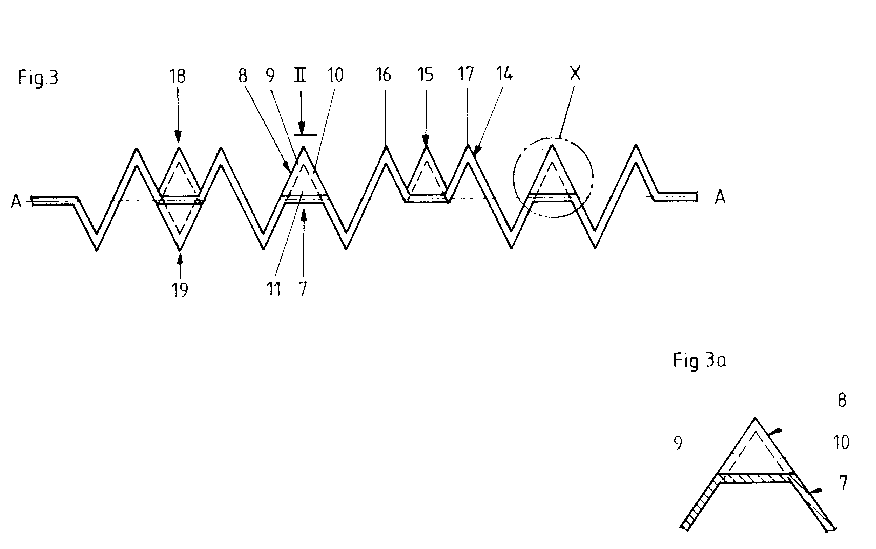

Zu einer solchen Verringerung der Schubfestigkeit ist gemäß einem Ausführungsbeispiel der vorliegenden Erfindung nach Fig. 3 jede dritte dieser Falten 7 mit aufeinanderfolgenden pyramidenförmigen Hohlkörpern 8 versehen ist. Diese Hohlkörper können nach einer Seite oder in beliebiger Verteilung nach der einen oder anderen Seite oder abwechselnd nach der einen oder anderen Seite abstehen. Im vorliegenden Fall sind die Hohlkörper 8 auf der Basisseite nach unten offen, wobei deren zwei gegenüberliegenden Seitenflächen 9,10 sich in den Flanken der Falte 7 fortsetzen. Die beiden anderen Seitenflächen 11,12 bilden einen Einschnitt 13 in der Längsfalte. Der Winkel der Seitenflächen zur Mittelebene des Bandes kann zwischen 30 Grad und 80 Grad liegen. Abhängig vom Abstand der Einschnitte 13 entstehen dabei Hohlkörper 8 mit quadratischem oder rechteckigem Querschnitt. Die Einschnitte 13 werden entsprechend dem Faltenquerschnittsprofil gestaltet, dadurch ergeben sich symmetrische pyramiden- bzw. kuppenförmige Körper mit unterschiedlicher Seitenneigung, unterschiedlich stark gerundeten Kuppen und scharfen oder gerundeten Seitenkanten. Der durch die Seitenflächen 11,12 gebildete Einschnitt 13 kann in seinem Grund zu einer Kante x-x zusammenlaufen oder in eine Rundung auslaufen.

Durch die leichte Verformbarkeit der Hohlkörper verschieben sich bei einer Schubbeanspruchung des Bandes die quadratischen oder rechteckigen Querschnitte paralellogrammartig, womit das Band 1 große Relativbewegungen der verbundenen Bauteile in Y-Richtung ohne Beeinträchtigung erlaubt. Um dieses parallelogrammartige Verschieben bzw. Verformen der Hohlkörperquerschnitte zu erleichtern, kann die Materialdicke in den Ecken und Kanten der Hohlkörper und der Einschnitte z.B. auf die Hälfte verringert werden, womit dort Sollknickstellen entstehen.

Neben diesen mit Quereinschnitten versehenen Falten 7 können noch weitere Längsfalten 14 vorgesehen sein, die die beim parallelogrammartigen Zusammenklappen der Hohlkörper auftretende Breitenänderungen kompensieren. Um bei Verschiebungsbewegngen in Y-Richtung die dabei auftretenden Schubverformungen sicher auf die mit Quereinschnitten versehenen Falten übertragen zu können muß die Steifigkeit dieser zusätzlichen Längsfalten 14 groß genug sein. Dies erreicht man durch eine größere Dicke dieser zusätzlichen Längsfalten 14. Diese Dicke ist vorzugsweise größer als die Wanddicke der Hohlkörper. Anstelle dieser Maßnahme oder neben derselben kann das angestrebte Ziel auch durch eine zusätzliche wellen-oder faltenförmige Gestaltung der Flächen der Zusatzfalten 14 erreicht werden. Dabei ist die "Wellenlänge" der Zusatzfalten 14 wesentlich kleiner als die "Wellenlänge" des Faltenbandes.

Die Hohlkörper können auch zur Mittelebene A-A spiegelbildlich angeordnet sein, sodaß die Spitzen der Hohlkörper 15 in dieselbe Richtung, wie die benachbarten Faltenkanten 16,17 zeigen. Eine weitere Ausführungsform ergibt sich durch eine abwechselnde Anordnung der Körper 18,19 auf jeweils einer Seite der Mittelebene A-A (nach innen und nach außen zeigend). Die Abstände zwischen zwei nach einer Seite der Mittelebene A-A weisende Hohlkörper 18 werden vergrößert, z.B. verdoppelt, womit die Einschnitte verbreitert werden und auf der gegenüberliegenden Seite der Mittelebene entsprechende Vertiefungen 19 entstehen.

Durch die Anzahl der Hohlkörperreihen kann das Verformungsverhalten in Y-Richtung eingestellt werden. In einer Ausführungsform wurde zwischen den einzelnen Hohlkörperreihen jeweils eine Faltenflanke unverändert belassen (d.h. anstelle jeder dritten Falte wurde eine Hohlkörperreihe angeordnet), wodurch das geforderte Verformungsverhalten in Y-Richtung erreicht wurde.

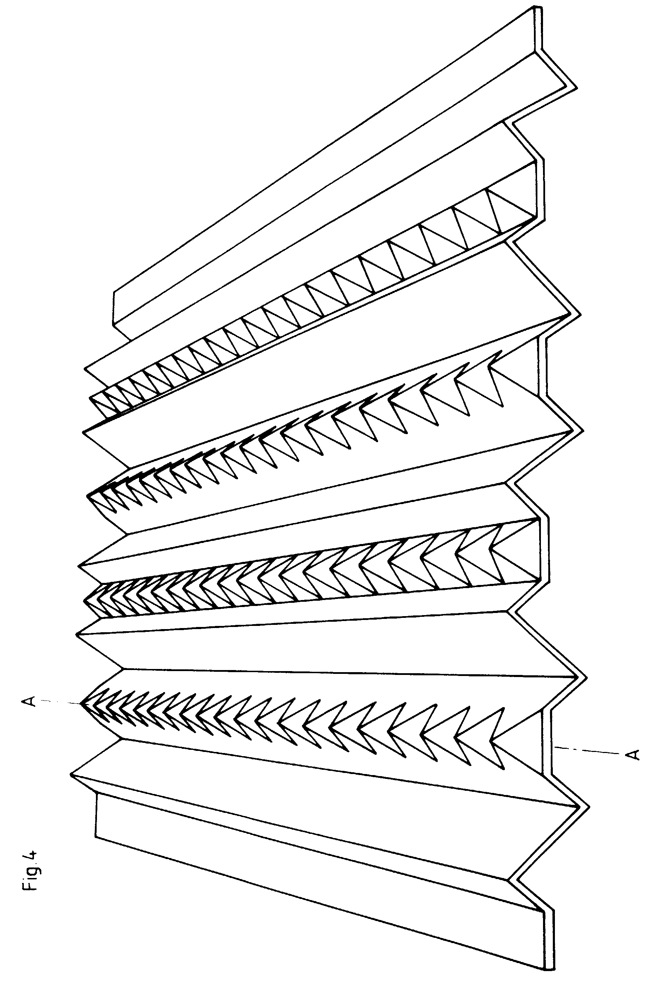

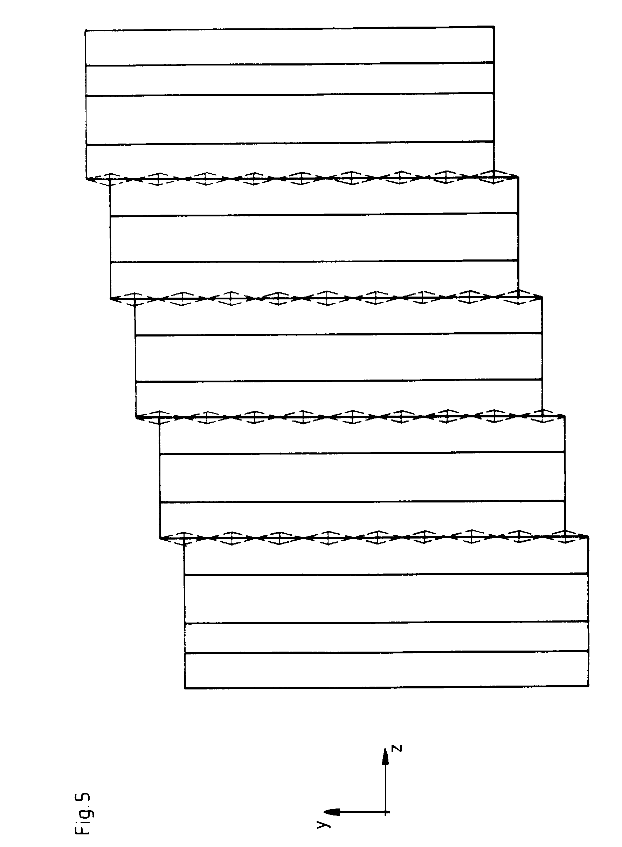

Fig. 3 zeigt eine Ausführungsform mit geraden dreikantförmigen Falten, wobei jede dritte Falte durch eine der möglichen Körperreihen ersetzt wurde. Fig. 4 zeigt ein Dichtungsband in perspektivischer Ansicht und Fig. 5 in Draufsicht bei Schubverformung.

Im Faltenband ist jede Kombination dieser unterschiedlichen Körperreihen einsetzbar. Durch Abrunden der Spitzen entstehen kuppenförmige Körper mit konvex geformten Seitenflächen.

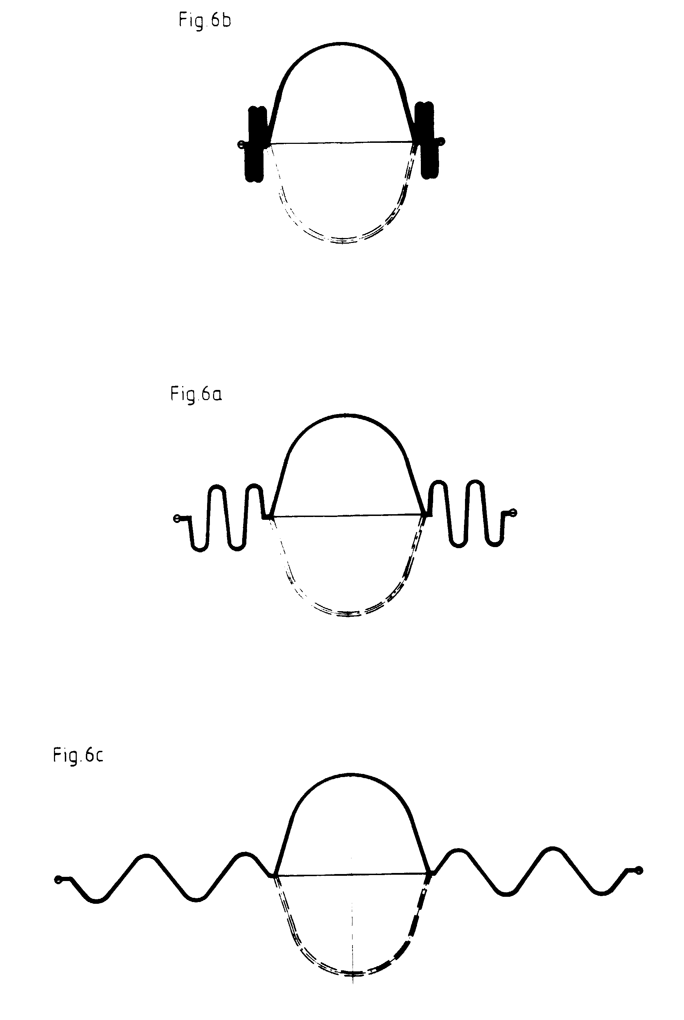

Fig. 6a zeigt den Querschnitt eines Faltenbandes mit einer mittleren Kuppenreihe, die abwechselnd auf der einen und strichliert dargestellt auf der anderen Seite des Bandes angeordnet sind, in unverformten, Fig 6b in zusammengedrücktem und Fig. 6c in gedehntem Zustand.

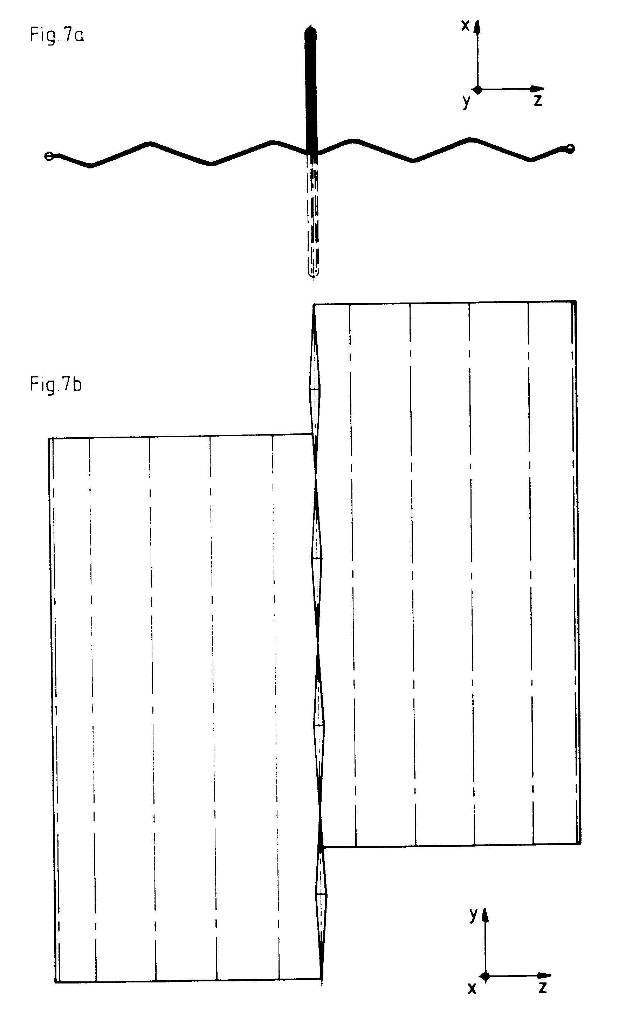

In Fig. 7a und 7b ist ein Bandabschnitt dargestellt, der in Z-Richtung gedehnt und in Y-Richtung verschoben wurde. Dabei schrumpfen die Kuppen und ermöglichen die große Schubverformung. Bei einer Basislänge der quadratischen Kuppe von beispielsweise 110 mm wird eine Schubverformung von +/- 100 mm ermöglicht. Die Dicke der Falten und der Kuppen liegt im Bereich zwischen 2mm und 8mm.

Die Dicke des Bandes 1 beträgt mindestens 1mm. Die Materialhärte liegt im Bereich von 50 bis 85 Shore A. Außerdem ist das gummielastische bzw. elastomere Material gegen Witterungseinflüsse wie UV- und Sonnenstrahlung, Ozon, Luftschadstoffe, Wind, Regen, Wärme und Kälte beständig.

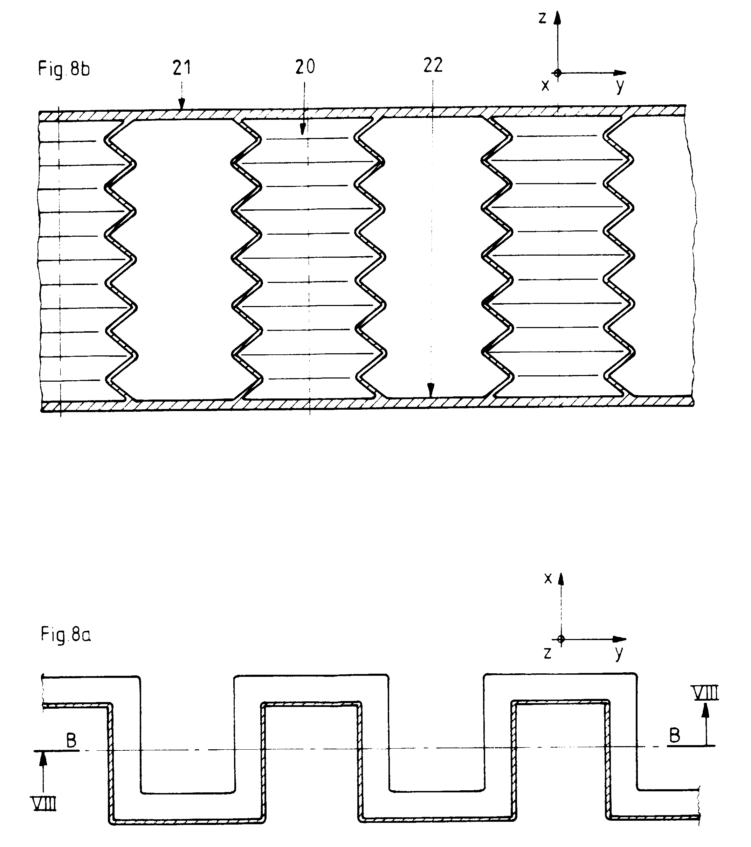

Eine andere Ausführungsform eines Dichtungsbandes, die die gestellten Anforderungen ebenfalls erfüllt, ist in der Fig. 8a und 8b dargestellt. Dabei wird ein im Querschnitt gewelltes Band in seiner Längsrichtung wiederum in Wellen bzw. Falten gelegt. Dadurch können sich die mit diesem Band verbundenen Bauteile relativ zueinander in allen drei Richtungen bewegen, ohne daß eine gegenseite Behinderung entsteht. Durch diese zweifache Wellung - einmal in Längs- und einmal in Querrichtung ist eine leichte Verformbarkeit in allen drei Raumrichtungen ohne Behinderung möglich.

An den Faltenbereich 20 sind beidseitig Befestigungbereiche 21 und 22 angeformt, die ein form- und/oder kraftschlüssiges Befestigen an den Bauteilen z.B. durch Kleben, Schweißen, Schrauben oder Nieten ermöglicht. Die Befestigungsbereiche können in der Mittelebene B-B verlaufen oder normal dazu angeordnet werden.

Diese Dichtungsbänder können entweder nur aus gummielastischem Material, aus mit zusätzlichen Festigkeitsträgern in Form von Fasern, Korden, Geweben oder Gewirken verstärktem gummielastischem Material oder aus gummiertem Gewebe hergestellt werden.

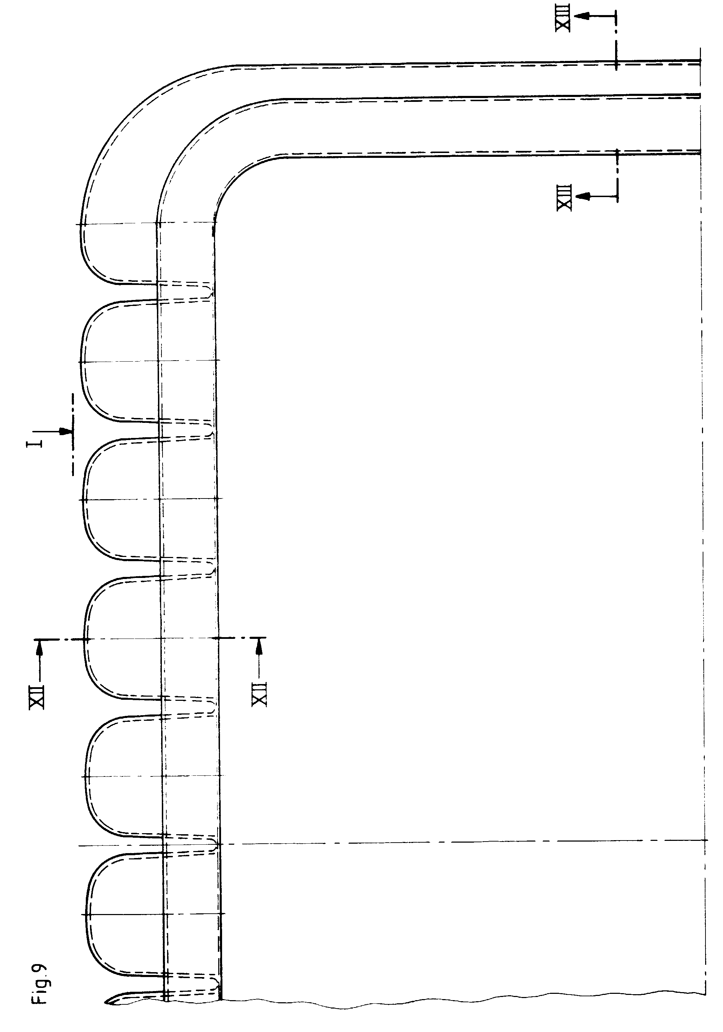

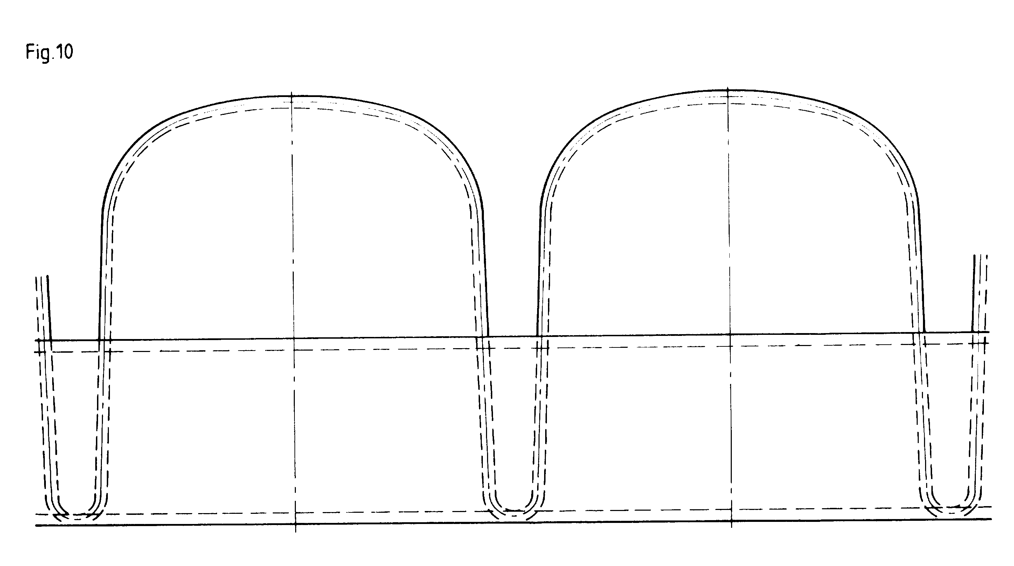

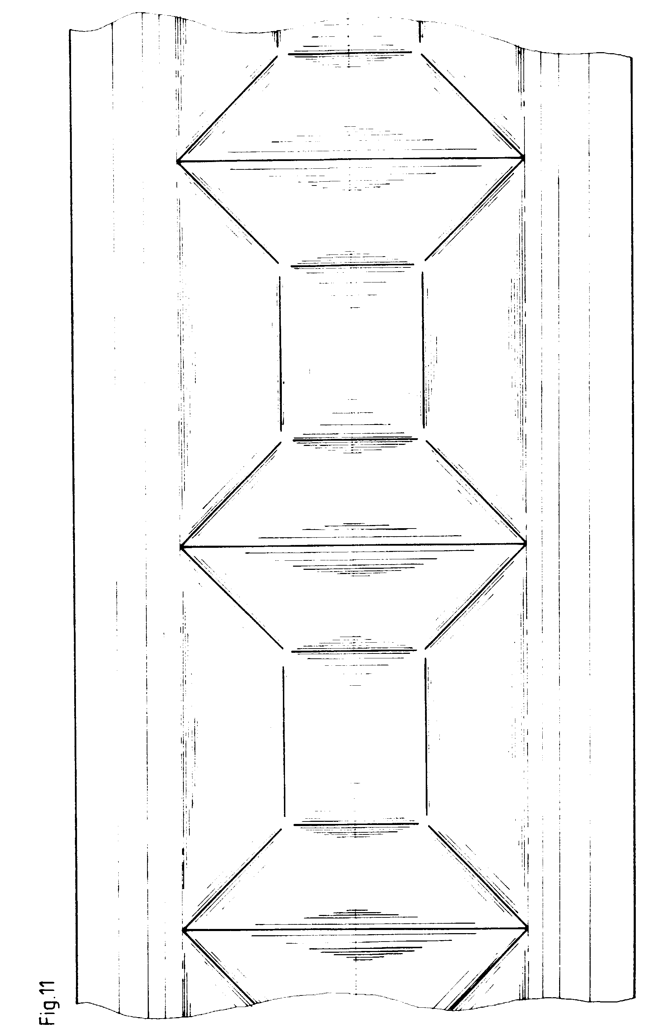

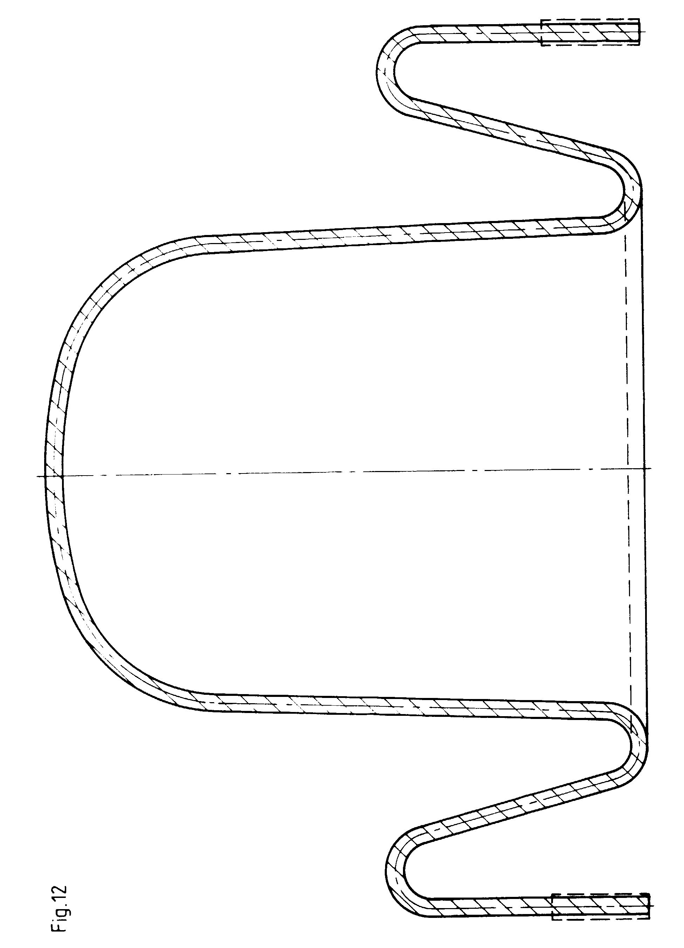

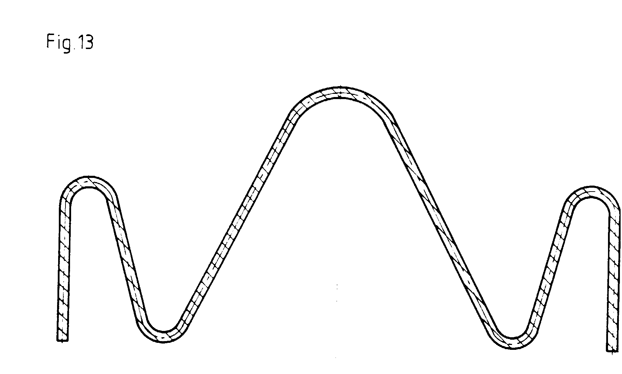

Bei einer weiteren Ausführungsform des umlaufenden Dichtungsbandes nach den Fig. 9 bis 13, welches z.B. zur Abdichtung der Personenübergänge zwischen Eisenbahnwaggons, Fußgängerbrücken etc. eingesetzt werden kann, sind die erfindungsgemäßen Hohlkörperlängsfalten nur an zwei gegenüberliegenden Seiten angeordnet, während an den beiden übrigen Seiten des Dichtungsbandes nur gerade Längsfalten vorgesehen sind. Bei Eisenbahnwaggonübergängen treten während der Fahrt im wesentlichen größere horizontale Relativbewegungen zwischen den Waggons auf (z.B. in Kurven und beim Überfahren von Weichen), während vertikale Relativbewegungen sehr gering sind. In diesem Fall reichen für die vertikal verlaufenden Flächen des Überganges gerade Längsfalten, während für die horizontal verlaufenden Flächen die wesentlich aufwendiger herzustellenden Hohlkörperfalten erforderlich sind.

Derartige Faltenbänder können duch Aufkonfektionieren der unvulkanisierten Elastomerschichten auf eine Form und anschließendes Vulkanisieren in einem Kessel, durch Formpressen oder durch Spritzguß hergestellt werden. Um zusammenhängende längere Bänder zu erhalten, werden entweder einzelne Teilabschnitte vulkanisiert und in einen weiteren Prozeß stumpf zusammenvulkanisiert oder in einem Schrittverfahren wird ein längeres Band aus unvulkanisierten Elastomerschichten abschnittsweise vulkanisiert. Zum Endlosmachen werden die Enden des Faltenbandes stumpf oder überlappend miteinander vulkanisiert oder verklebt.

Die Dichtungsbänder können auch aus mehreren Materialien mit unterschiedlichen Eigenschaften, Farben und Oberflächendesigns bestehen. Die Außenseite dieser umlaufenden Dichtungsbänder wird in vielen Fällen aus einem hochwertigen licht- und witterungsbeständigem, verschleißfesten Elastomer bestehen, während an das Material der Innenseite geringere Anforderungen gestellt werden. Außen- und Innenseite können zur gefälligeren optischen Gestaltung in unterschiedlichen Farben bzw. Oberflächendesigns gestaltet werden. Besonders für den Einsatz im Fahrzeugbau müssen die Dichtungsbänder aus einem dynamisch hochwertigen Material hergestellt werden.

## Patentansprüche

1. Elastisches Faltenband oder Wellenband, welches beispielsweise aus gummielastischem bzw. elastomeren Material besteht und als umlaufendes Dichtungsband für Bauwerke im Hoch-, Tief-, Fahrzeug- und Maschinenbau einsetzbar ist, an mindestens zwei einander gegenüberliegenden Stellen, vorzugsweise endseitigen Rändern mit dem Bauwerk, Fahrzeug der Maschine od.dgl. verbunden ist und auf Schub verformbare hohle Auskröpfungen, Hohlkörper od.dgl. aufweist, dadurch gekennzeichnet, daß die Auskröpfungen, Hohlkörper (8) od.dgl. an mindestens einer Falte (7) quer zur Richtung der Faltung oder Wellung hintereinander angeordnete Reihen bilden, welche durch Einschnitte (13) unterbrochen sind.

2. Band nach Anspruch 1, dadurch gekennzeichnet, daß die Auskröpfungen (8) im Bereich ihrer Verbindung mit der Falte nach außen offen sind.

3. Band nach Anspruch 1 oder 2, dadurch gekennzeichnet, daß die Auskröpfungen (8), Hohlkörper od.dgl. in Fortsetzung der Falten oder der Wellenberge und bzw. oder der Faltenoder Wellentäler vorgesehen sind.

4. Band nach Anspruch 1, dadurch gekennzeichnet, daß die Einschnitte (13) jeweils zwei mit ihrer Seitenflächen zusammenhängende Auskröpfungen, Hohlkörper (8) od.dgl. bilden und die restlichen Seitenflächen in die Faltenflächen übergehen.

5. Band nach den Ansprüchen 2 und 4, dadurch gekennzeichnet, daß die Auskröpfungen, Hohlkörper (8) od.dgl. die Form von vierseitigen Pyramiden oder Kuppen haben.

6. Band nach Anspruch 1, dadurch gekennzeichnet, daß der Grundriß der Auskröpfungen, Hohlkörper (8) od.dgl. quadratisch oder rechteckig ist.

7. Band nach Anspruch 1 und 5, dadurch gekennzeichnet, daß der Abstand der auf einer Seite des Dichtungsbandes aufeinanderfolgenden Auskröpfungen, Hohlkörper (8) od.dgl. vergrößert und dazwischen eine bzw. ein auf der entgegengesetzten Seite des Dichtungsbandes angeordnete Auskröpfung bzw, angeordneter Hohlkörper gelegen ist, wobei eine Außenfläche einer Auskröpfung bzw. eines Hohlkörpers (8) in die Innenfläche der nächstliegenden Auskröpfung bzw. des nächstliegenden Hohlkörpers (8) übergeht.

8. Band nach Anspruch 1, dadurch gekennzeichnet, daß das Band (1) in quer zur Längsrichtung angeordneten Wellen oder Falten verläuft und die durch das Band (1) gebildeten, quer zu seiner Längsrichtung verlaufenden Falten (7) bzw. Wellen Dreiecks-, Rechtecks-, Sinus- oder Halbkreisform haben.

9. Band nach mindestens einem der Ansprüche 1 bis 8, dadurch gekennzeichnet, daß die Dicke des Bandes (1) mindestens 1 mm beträgt und die Materialhärte im Bereich von 50 bis 86 Shore A liegt.

10. Band nach einem der Ansprüche 1 bis 9, dadurch gekennzeichnet, daß das gummielastische bzw. elastomere Material gegen Witterungseinflüsse wie UV- und Sonnenstrahlung, Ozon, Luftschadstoffe,
